Europäisches Patentamt

European Patent Office

Office européen des brevets

(11) Publication number: **0 370 684**
**A1**

# EUROPEAN PATENT APPLICATION

(21) Application number: 89311806.7

(22) Date of filing: 15.11.89

(51) Int. Cl.⁵: **H01M 4/50, H01M 4/48, H01M 10/40**

(30) Priority: 17.11.88 JP 291226/88

(43) Date of publication of application:
**30.05.90 Bulletin 90/22**

(84) Designated Contracting States:
**DE FR GB**

(71) Applicant: **Matsushita Electric Industrial Co., Ltd.**
**1006, Oaza Kadoma**
**Kadoma-shi Osaka-fu, 571(JP)**

(72) Inventor: **Eda, Nobuo**
**5-6-101, Hujisakanishimachi**
**Hirakata-shi Osaka(JP)**
Inventor: **Morita, Akiyoshi**
**5-8-16, Hagoromo**
**Takaishi-shi Osaka(JP)**
Inventor: **Ota, Akira**
**1-46-27, Hannan-sho Abeno-ku**
**Osaka-shi Osaka(JP)**
Inventor: **Hino, Takashi**
**1-18-9, Nasuzukuri**
**Hirakata-shi Osaka(JP)**

(74) Representative: **Dawson, Elizabeth Ann et al**
**A.A. THORNTON & CO. Northumberland House 303-306 High Holborn**
**London WC1V 7LE(GB)**

(54) **Non-aqueous electrolyte secondary batter and method of producing the same.**

(57) A non-aqueous electrolyte secondary battery which comprises a composite oxide consisting of manganese and lithium as an active material of a positive electrode (6) wherein crystal having tetragonal sublattice, of which lattice constants of a and c axes are respectively within 4.8 to 5.1 Å and 2.83 to 2.87 Å, is contained. In the aforementioned non-aqueous electrolyte secondary battery, cycle-capacity characteristic is stable.

F I G. I

## Non-Aqueous Electrolyte Secondary Battery and Method of Producing the Same

The present invention generally relates to a secondary battery using a non-aqueous electrolyte. More particularly, the present invention relates to a secondary battery wherein an active material of a positive electrode is improved and thereby the stability of discharging capacity is made better as cycles are proceeded.

Conventionally, batteries using a non-aqueous electrolyte and lithium as an active material for a negative electrode are put to practical use as primary batteries because voltage and energy density are high therein. Further, the batteries have widely been used as power sources of electronic equipments for consumer use, power sources of medical equipments and the like.

Recently, attempts have been made to produce light secondary batteries which are characterized in that the voltage and the energy density are high.

To achieve the high energy density of the battery, it is necessary, for example, to use the active material of which voltage is high as a positive electrode. The applicable materials are, for example, transition metal oxides such as vanadium pentaoxide, manganese dioxide and the like. In particular, the manganese oxide is relatively cheap, and therefore has been studied largely. If the manganese dioxide, which is heated and debydrated in the same manner as that in the non-aqueous electrolyte primary batteries, is used, the discharging capacity is largely decreased as the charge and discharge proceed in the earlier cycles. The aforementioned is not preferable for the characteristics of secondary batteries.

It is an object of the present invention to solve the aforementioned problems and to provide a secondary battery using a non-aqueous electrolyte wherein a cycle-capacity characteristic is stable, i.e. discharging capacity remains stable even if the charge and discharge cycles are proceeded.

It is a further object of the present invention to provide a secondary battery wherein the capacity, accompanied with charge and discharge, is little lowered by using a composite oxide consisting of manganese and lithium as an active material of a positive material.

It is another object of the present invention to provide an easy method of synthesizing composite oxides consisting of manganese and lithium.

To attain the aforementioned objects, the present invention relates to a secondary battery comprising a negative electrode made of active light metals, preferably using metallic lithium itself or lithium under alloy with other metals as an active material, a non-aqueous electrolyte and a positive electrode made of the composite oxide consisting of manganese and lithium, for example $Li_xMnO_2$ ($0<x<1$) and comprises a material containing tetragonal sublattice as a composite oxide for the positive electrode, wherein lattice constants of a and c axes obtained from X-ray diffraction chart are within 4.8 to 5.1 Å and 2.83 to 2.87 Å, respectively.

In the foregoing, the composite oxide, which preferably consists of manganese and lithium and is used as the active material of the positive electrode, can be prepared by electrochemically reducing manganese dioxide in the non-aqueous electrolyte containing lithium salt. The material thus prepared contains tetragonal sublattice of which lattice constants of a and c axes obtained from the X-ray diffraction chart are respectively within 4.8 to 5.1 Å and 2.83 to 2.87 Å, and crystal structure suitable for the charge and discharge whereby Li is easily released and absorbed when the material is incorporated into the battery.

Here, both electrolytic managanese dioxide (EMD) and chemical manganese dioxide (CMD) can be used.

Moreover, the composite oxide, which consists of manganese and lithium, may be synthesized by not only electrochemical reduction but also chemical reduction. Furthermore, the aforementioned can be achieved by burning the mixture of manganese dioxide and lithium salt or lithium compound for about ten hours at the temperature of about 400 °C in the air. Here, lithium nitrate or lithium hydroxide can be used as lithium salt or lithium compound.

In the aforementioned composite oxide consisting of manganese and lithium, the crystal structure thereof is suitable for the secondary battery, i.e. the charge and discharge cheracteristics are stable, therefore, a long cycle life secondary battery can be obtained, which is characterized in that the capacity, accompanied with the charge and discharge cycles, is little lowered and that the cycle-capacity is stable.

This and other objects and features of the present invention will become clear from the following description taken in conjunction with a preferred embodiment thereof with reference to the accompanying drawings, in which :

Fig. 1 is a secion view of a coin-type secondary bettery in an embodiment of the present invention:

Fig. 2 is a characteristic chart illustrating the relationship between the cycle and the capacity of the battery adopted in the embodiment of the present invention:

Fig. 3 is a partial view of X-ray diffraction chart of electrochemically reduced composite oxides consisting of managese and lithium wherein tetragonal sublattices are contained.

Fig. 4 is a view showing the lattice constants of the tetragonal sublattice of the composite oxide consisting of managnese and lithium after predischarging and after chargins.

The embodiment of the present invention will be discussed below with reference to the drawings.

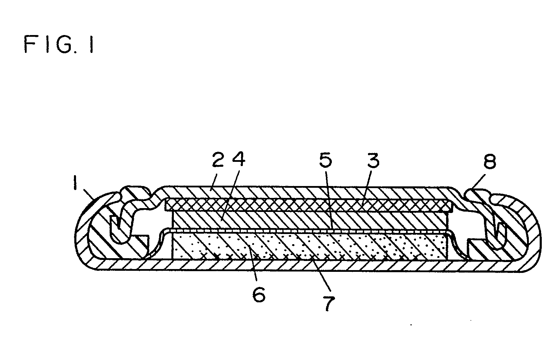

Fig. 1 is a view illustrating a coin-type secondary battery using a non-aqueous electrolyte, adopted in the embodiment of the present invention. In Fig. 1, the numeral 1 is a stainless steel case of which corrosion-resistance is high. The numeral 2 is a sealing lid made of the same material as that of the case. The numeral 3 is a collector body comprised of a nickel plate spot-welded inside the sealing lid 2. The numeral 4 is a lithium negative electrode which is 160 $\mu$m in thickness and is 14.5 mm in diameter, the lithium negative electrode being clad on the collector body 3, and the electric capacity thereof is about 54.4 mAh. The numeral 5 is a separator comprised of a microporous film made of polypropylene. The numeral 6 is a positive electrode, wherein 70 parts by weight of electrolytic manganese dioxide burnt for 50 hours at the temperature of 400°C in the air, 15 parts by weight of carbon black as a electroconductive agent and 15 parts by weight of fluororesin as a binding agent are mixed and ground, and 50 mg of the resulting material is molded with 14.5 mm in diameter and 0.35 mm in thickness on titanium collector body 7 spot-welded inside the case 1. A solvent, which is made by mixing ethylene carbonate and dimethoxyethane in the volume ratio 50:50, is added to a solute, which is made by dissolving LiPF, to become the concentration of 1 mol/1. The material thus obtained is used as the battery electrolyte. The positive electrode is impregnated with the predetermined amount of the aforementioned electrolyte, and thereafter the case is caused to bend toward the sealing lid side for caulking together with a gasket 8 made of polypropylene. The battery is 20 mm in diameter and 1.6 mm in height. Next, the batteries obtained under the above condition are predischarged with 0.46 mA (0.28 mA/cm$^2$) at the temperature of 20°C according to the condition shown in Table 1, and thereafter are aged for 3 days at the temperature of 60°C.

Table 1

| Battery No. | Amount of predischarging | Discharging depth |
|---|---|---|
| A | 0 mAh (normal) | 0 e/Mn |
| B | 3.23 | 0.30 |
| C | 5.39 | 0.50 |
| D | 7.55 | 0.70 |
| E | 9.70 | 0.90 |

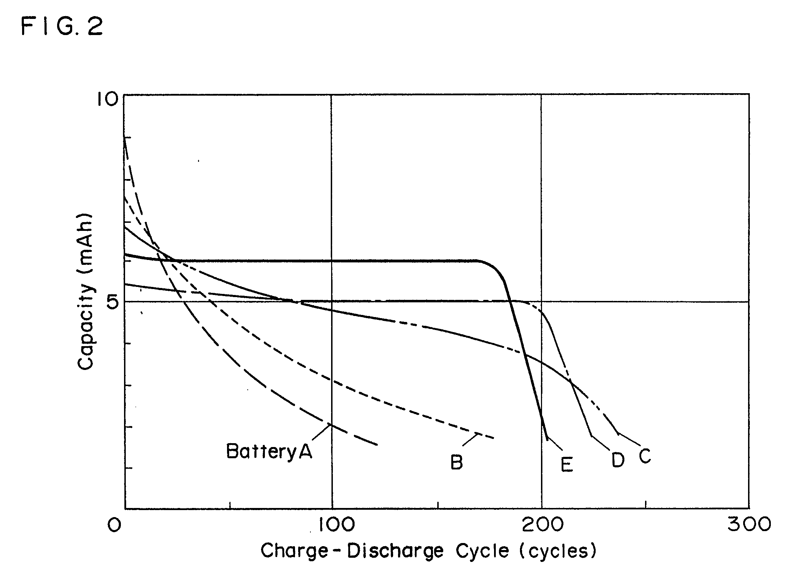

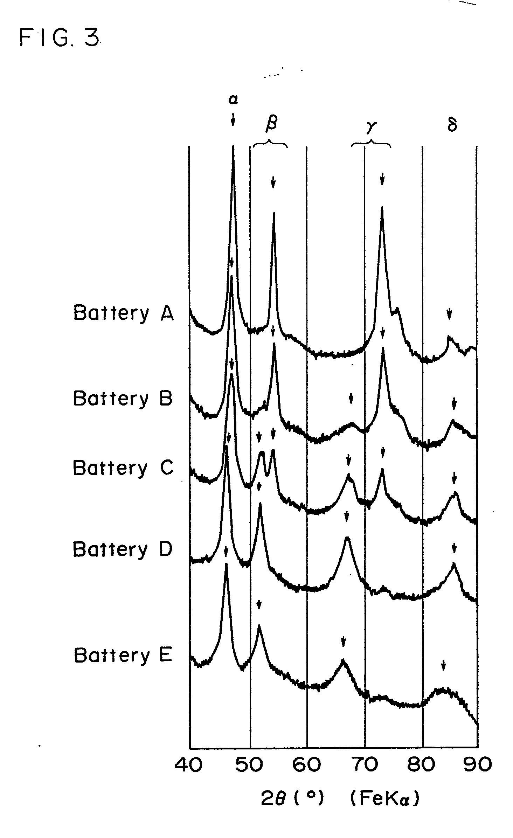

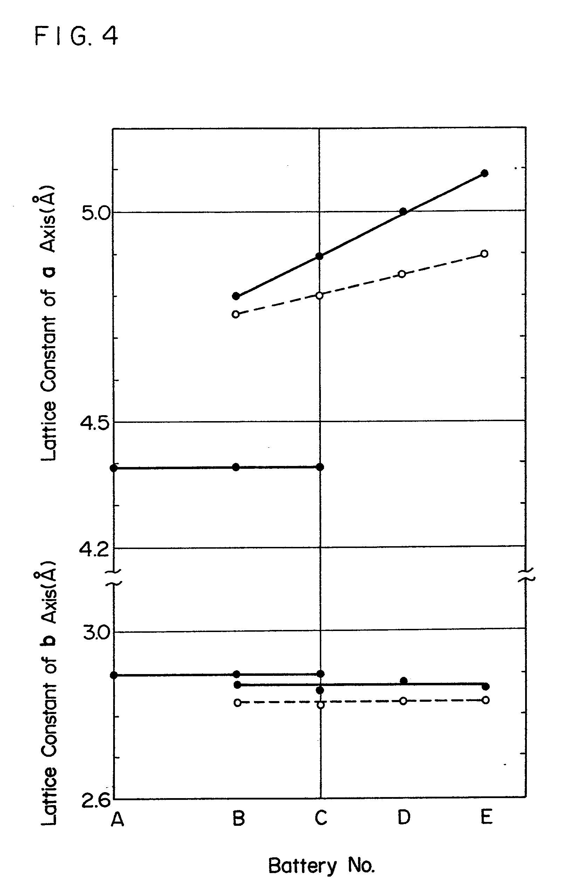

Thereafter, the aforementioned batteries are charged and discharged at the temperature of 20°C. The following pattern is performed by one cycle. Namely, the batteries are charged with a constant current of 0.46 mA until the voltage thereof reaches 3.8 V, and then a rest is made for five minutes. Thereafter, they are discharged with a constant current of 1.53 mA until the voltage thereof reaches 2.0 V, and then a rest is made for five minutes. Fig. 2 shows the characteristics of life under the condition of the charge and discharge cycles. Further, Fig. 3 shows a part (40° ≤ 2$\theta$ ≤ 90°) of X-ray diffraction chart (X-ray source is regarded as K$\alpha$ of tubular bulb Fe) of the positive electrode after the aforementioned predischarging. In Fig. 3, there are several main peaks shown by $\alpha$ to $\delta$ and arrows. Further, there are wide peaks in d = 4.0 to 4.5 Å. Fig. 4 shows the change in lattice constants in tetragonal sublattice of a and c axes by solid lines, which lattice constants are found by giving Miller indices of (101), (111), (211) and (301 and 002) to $\alpha$ to $\delta$ of the main peaks, respectively. As shown in Fig. 4, each battery of B and C has two lattice constants of a axis and two lattice constants of c axis. This means two crystals of large lattice constants and small lattice constants are mixed in these batteries. Referring to the cycle life characteristic shown in Fig. 2, the battery sequence E>D>C>B>A (normal) is preferable in respect of the stability of capacity and the value of capacity. In particular, the batteries E and D are excellent in the stability of capacity. If the characteristics thereof are as excellent as or more excellent than that of the battery C, the batteries are almost satisfactory. Fig. 4 shows the change in lattice constants reflexting the aforementioned characteristics. In particular, the lattice constant of a axis is characterized. It is desirable that the lattice constant of a axis 5.0 to 5.09 Å for the batteries D and E and 4.89 to 5.09 Å for the batteries C, D and E. further, it is desirable that the lattice constant of c axis is 2.87 Å. If these batteries are charged under the aforementioned condition, the above lattice is slightly shrunk. The changes in lattice constants of a and c axes in this case are shown by dashed lines in Fig. 4. The preferable lattice constants of a and c axes are respectively within 4.8 to 5.1 Å and 2.83 to 2.87 Å for the batteries C to E, in consideration of the state after charging. Even if the charge and discharge is repeated, the lattice constants of a and c axes are within the aforementioned range.

As discussed above, the present invention provides a non-aqueous electrolyte battery using the composite oxide consisting of manganese and lithium as an active material of a positive electrode, wherein if the crystal structure of the above composite oxide containing tetragonal sublattice, of which lattice constants of a and c axes are respectively within 4.8 to 5.1 Å and 2.83 to 2.87 Å, is adopted, the characteristic of capacity can be made excellent accompanied with the charge and discharge cycles.

In the aforementioned embodiment, the lattice constants a and c are obtained by giving Miller indices of faces in tetragonal lattice to the main peaks of α to δ respectively in Fig. 3. Likewise, the lattice constants a, b and c of orthorhombic lattice, which are found by giving Miller indices of (201), (211), (411) and (601 and 002) to the main peaks of α to δ exactly correspond to the values which are found by combining two unit cells of the aforementioned tetragonal sublattice.

## Claims

1. A non-aqueous electrolyte secondary battery comprising:
a negative electrode using a light metal as an active material:
a non-aqueous electrolyte: and a positive electrode comprised of a composite oxide consisting of mangnese and lithium:
said composite oxide of positive electrode containing crystals having tetragonal sublattice of which lattice constants of a and c axes are within 4.8 to 5.1 Å and 2.83 to 2.87 Å, respectively.

2. A method of producing a non-aqueous electrolyte secondary battery by utilizing a negative electrode using a light metal as an active material, a non-aqueous electrolyte and a positive electrode comprising a composite oxide which consists of manganese and lithium wherein crystal having tetragonal sublattice, of which lattice constants of a and c axes are respectively within 4.8 to 5.1 Å and 2.83 to 2.87 Å, is contained, said composite oxide being obtained by electrochemical reduction of managnese dioxide in the non-aqueous electrolyte containing lithium salt.

3. A method according to Claim 2, wherein said manganese dioxide is obtained by the electrolysis.

4. A method according to Claim 2, wherein said manganese dioxide is obtained by the chemical synthesis.

5. A method of producing a non-aqueous electrolyte secondary battery by utilizing a negative electrode using a light metal as an active material, a non-aqueous electrolyte and a positive electrode comprising a composite oxide which consists of manganese and lithium wherein crystal having tetragonal sublattice, of which lattice constants of a and c axes are respectively within 4.8 to 5.1 Å and 2.83 to 2.87 Å, is contained, said composite oxide being obtained by burning the mixture of manganese dioxide and lithium compound in the air.

6. A method according to Claim 5, wherein said lithium compound is lithium nitrate.

7. A method according to Claim 5, wherein said lithium compound is lithium hydroxide.

F I G. 1

F I G. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DD-A- 258 308 (TECHNISCHE UNIVERSITÄT DRESDEN) <br> * Claims 1-3; page 1, last paragraph - page 2, paragraph 1; examples 1-2 * <br> --- | 1-3 | H 01 M 4/50 <br> H 01 M 4/48 <br> H 01 M 10/40 |
| T | JOURNAL OF THE ELECTROCHEMICAL SOC., vol. 136, no. 11, November 1989, pages 3169-3174, The Electrochemical Society, Inc.; O. TSUTOMU et al.: "Electrochemistry of manganese dioxide in lithium nonaqueous cell" <br> * Abstract; page 3170, left-hand column, paragraph 3; page 3172, right-hand column, paragraph 2; figure 4; page 3173, right-hand column, paragraph 4 * <br> --- | | |
| T | CHEMISTRY EXPRESS, vol. 4, no. 12, 1989, Kinki Chemical Society, JP; O. TSUTOMU et al.: "Preliminary results on synthesis and characterization of LixMnO2-delta for rechargeable lithium cell", pages 777-780 <br> * Abstract; page 777, line 13 - page 778, line 3; figure 1 * <br> --- | | TECHNICAL FIELDS SEARCHED (Int. Cl.5) <br><br> H 01 M |
| X | EP-A-0 265 950 (SANYO ELECTRIC CO.) <br> * Claims 1,2,3,5; column 4, lines 24-31; column 7, lines 30-33; column 2, lines 31-40; column 6, lines 8-23,31-33 * <br> --- -/- | 5-7 | |

The present search report has been drawn up for all claims

| Place of search | Date of completion of the search | Examiner |
|---|---|---|
| THE HAGUE | 22-02-1990 | D'HONDT J.W. |

European Patent
Office

EUROPEAN SEARCH REPORT

Application Number

EP 89 31 1806

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 107, no. 22, 30th November 1987, page 230, abstract no. 202118h, Columbus, Ohio, US; & JP-A-62 108 457 (SANYO ELECTRIC CO.) 19-05-1987 * Abstract * | 5,7 | |
| X | PROC. ELECTROCHEM. SOC., 1988, vol. 88-6; N. FURUKAWA et al.: "Manganese oxides for lithium secondary battery", pages 557-564 * Abstract; page 558, left-hand column, paragraph 3; page 559, paragraphs 2-3 * | 5,7 | |
| A | MATER. RES. BULL., vol. 19, no. 2, 1984, pages 99-106, Pergamon Press Ltd; W.I.F. DAVID et al.: "Lithium insertion into beta-MnO2 and the rutile-spinel transformation" * Abstract; page 100, paragraph 2; page 104, paragraph 2; page 103, last paragraph; page 105, paragraph 4 * | 2,5,7 | TECHNICAL FIELDS SEARCHED (Int. Cl.5) |
| A | PATENT ABSTRACTS OF JAPAN, vol. 6, no. 119 (E-116)[997], 3rd July 1982; & JP-A-57 49 164 (FUJI DENKI KAGAKU K.K.) 20-03-1982 * Whole abstract * | 5 | |
| A | PATENT ABSTRACTS OF JAPAN, vol. 12, no. 184 (E-614)[3031], 28th May 1988; & JP-A-62 290 058 (SONY CORP.) 16-12-1987 * Whole abstract *       -/- | 1 | |

The present search report has been drawn up for all claims

| Place of search | Date of completion of the search | Examiner |
|---|---|---|
| THE HAGUE | 22-02-1990 | D'HONDT J.W. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 196 785 (SONY CORP.)<br>* Claims 3,4,5; figures 3,7,12; page 3, lines 2-6,21-60; page 4, lines 10-23; page 5, lines 34-43 * | 5 | |
| A | EP-A-0 279 235 (SANYO ELECTRIC CO.)<br>* Claims 9-10; example 4 * | 5,6 | |
| P,X | CHEMICAL ABSTRACTS, vol. 111, no. 10, 4th September 1989, abstract no. 81302k, Columbus, Ohio, US; N. FURUKAWA et al.: "Lithium manganese dioxide (composite dimensional manganese oxide - CDMO) as a cathode active material for lithium secondary batteries", & DENKI KAGAKU OYOBI KOGYO BUTSURI KAGAKU 1989, 57(6), 533-8<br>* Abstract * | 5,7 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 22-02-1990 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P0401)